# EUROPÄISCHE PATENTSCHRIFT

(11) **EP 1 231 364 B1**
(45) Veröffentlichungstag und Bekanntmachung des Hinweises auf die Patenterteilung: **02.01.2004**
(21) Anmeldenummer: 02001642.4
(22) Anmeldetag: 24.01.2002
(51) Int. Cl.: F01N 7/00, F01N 7/14, F01N 7/18, F16L 59/06, F16L 59/18, F01N 7/08

(54) **Abgasleitung mit Luftspaltisolierung für eine Brennkraftmaschine**
Exhaust gas duct of an engine having an air insulation layer
Conduite d'échappement pour moteur à combustion interne ayant une couche d'air isolante

(30) Priorität: 07.02.2001 DE 10105841
(43) Veröffentlichungstag der Anmeldung: 14.08.2002
(73) Patentinhaber: Benteler Automobiltechnik GmbH, 33104 Paderborn (DE)
(72) Erfinder: Gabriel, Heinrich, 34434 Borgentreich (DE); Grussmann, Elmar, 33184 Altenbeken (DE); Kleinschmidt, Jürgen, 37688 Beverungen (DE); Smatloch, Christian, Dr., 33100 Paderborn (DE)
(74) Vertreter: Bockermann, Rolf, Dipl.-Ing.

(56) Entgegenhaltungen:
- EP-A- 0 503 580
- DE-A- 4 134 466

## Beschreibung

Die Erfindung betrifft eine Abgasleitung mit Luftspaltisolierung für eine Brennkraftmaschine gemäß den Merkmalen im Oberbegriff des Patentanspruchs.

Abgasleitungen in Brennkraftmaschinen können aus Rohren, teilweise aber auch aus Blechteilen gebildet sein. Insbesondere in luftspaltisolierten Vorrohren von Abgasleitungen von Brennkraftmaschinen ist die unterschiedliche Ausdehnung der einzelnen Komponenten (Inliner → Rohr oder Blech bzw. das den Inliner mit Abstand ummantelnde Jacket → Rohr oder Blech) zu berücksichtigen. Die unterschiedliche Ausdehnung der Komponenten ergibt sich zum einen durch den Einsatz unterschiedlicher Materialien und auch durch verschiedene Temperaturen. Temperaturunterschiede ergeben sich deshalb, weil zum Beispiel die Komponente Inliner direkt mit dem heißen Abgas in Kontakt steht, während das den Inliner mit Abstand umgebende Jacket zum Inliner durch einen Luftspalt isoliert ist.

Würde man den Inliner mit einem Jacket zum Beispiel durch ein Schmelzschweißfügeverfahren oder durch Formschluss verbinden, würden in den Komponenten unweigerlich derart hohe Spannungen erzeugt werden, die einen Bruch der Komponenten, insbesondere bei hohen Temperaturen, zur Folge hätten.

Der EP 0 503 580 A1 ist eine Abgasleitung mit Luftspaltisolierung für eine Brennkraftmaschine zu entnehmen, welche einen Abgas führenden Inliner und ein den Inliner mit Abstand ummantelndes Jacket aufweist. Eine Stirnseite des Jackets sowie eine Stirnseite des Inliners verlaufen in derselben Querebene. In den Spalt zwischen dem Inliner und dem Jacket ist ein Ausgleichselement in Form eines einen rechteckigen Querschnitt aufweisenden Drahtgestricks eingegliedert. Dieses Ausgleichselement ist in einer durch eine rinnenartige Falzung eines Rohrstücks gebildeten Halterung eingespannt und an der äußeren Oberfläche des Inliners relativ beweglich abgestützt. Die Halterung geht in einen Ringansatz über, dessen Länge etwa ein Drittel der Breite des Ausgleichselements entspricht. Dieser Ringansatz steht so weit über die gemeinsame Querebene der Stirnseiten des Inliners und des Jackets vor, dass der Ringansatz mittels einer Kehlnaht stirnseitig des Jackets axial fixiert werden kann.

Dieser Vorschlag stellt zwar im Vergleich zu dem vorbekannten Stand der Technik eine Verbesserung dar, berücksichtigt aber noch nicht in einer wirklich befriedigenden Weise die jeweiligen örtlichen Gegebenheiten im Hinblick auf die Beeinflussung der Schwingungscharakteristik der Abgasleitung. Grund hierfür ist die relativ kurze axiale Länge des Ringansatzes in Relation zu der demgegenüber deutlich größeren axialen Erstreckung (Breite) des Ausgleichselements.

Der Erfindung liegt - ausgehend vom Stand der Technik - die Aufgabe zugrunde, eine Abgasleitung mit Luftspaltisolierung für eine Brennkraftmaschine zu schaffen, die unter Beibehaltung des bekannten einfachen Aufbaus und problemloser Montage bei einwandfreier Lageorientierung eines Inliners innerhalb eines Jackets in Abhängigkeit von den örtlichen Gegebenheiten hinsichtlich ihrer Schwingungscharakteristik gestaltet werden kann.

Diese Aufgabe wird mit den im kennzeichnenden Teil des Patentanspruchs aufgeführten Merkmalen gelöst.

Ein wesentliches Merkmal der Erfindung besteht darin, dass eine Stirnseite eines am äußeren Umfang des Jackets im Abströmbereich der Abgasleitung befestigten Flansches sich ebenfalls in der Querebene erstreckt, in welcher auch die Stirnseiten des Inliners und des Jackets verlaufen. Über die Stirnseiten vorstehende Längenabschnitte sind nicht mehr vorhanden. Weitere wesentliche Merkmale der Erfindung sind die Fixierung des freien Endes des zylindrischen Längenabschnitts an der inneren Oberfläche des Jackets und die relativ bewegliche Abstützung des Ausgleichselements an der äußeren Oberfläche des Inliners.

Die Erfindung hat in diesem Zusammenhang erkannt, dass die gezielte Fixierung des zylindrischen Längenabschnitts an der inneren Oberfläche des Jackets die Gefahr erheblich verringert, dass beim Schweißen Schweißspritzer in den Inliner gelangen können. Auch braucht im Rahmen der Erfindung der im Vergleich zum Jacket erheblich dünnere und heißere Inliner bei der relativen thermischen Ausdehnung nicht mehr sowohl das Ausgleichselement als auch den Längenabschnitt mit zu bewegen. Schließlich hat die Erfindung noch erkannt, dass die Überlagerung der hochfrequenten Pulsationsschwingungen des Abgases durch das Ausgleichselement gedämpft werden und sich dadurch nicht mehr in voller Höhe auf den Reibungsbereich zwischen der dem Jacket zugewandten Seite der Halterung und der inneren Oberfläche des Jackets auswirken können. Das Ausgleichselement wirkt mithin reibungsreduzierend mit dem Ergebnis, dass der heiße Inliner weniger belastet wird.

Durch die Kombination der Merkmale im kennzeichnenden Teil des Schutzanspruchs kann jetzt die Länge des zylindrischen Längenabschnitts in Abhängigkeit von den jeweiligen örtlichen Gegebenheiten exakt bestimmt und damit die Schwingungscharakteristik einer Abgasleitung gezielt beeinflusst werden. Außerdem sind hierdurch das Resonanzverhalten und die Dauerfestigkeit günstig beeinflussbar.

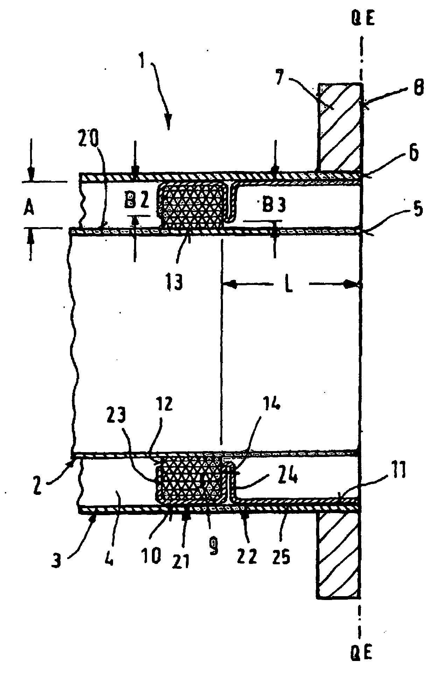

Die Erfindung ist nachfolgend anhand eines in der Zeichnung dargestellten Ausführungsbeispiels näher erläutert.

Mit 1 ist eine Abgasleitung, insbesondere in Form eines luftspaltisolierten Vorrohrs, für eine ansonsten nicht näher dargestellte Brennkraftmaschine bezeichnet.

Die Abgasleitung 1 umfasst einen rohrförmigen Inliner 2 (Innenrohr), der von dem Abgas durchströmt wird. Im radialen Abstand A zu dem Inliner 2 befindet sich ein den Inliner 2 ummantelndes rohrförmiges Jacket 3 (Außenrohr). Dadurch wird zwischen dem Inliner 2 und dem Jacket 3 ein Spalt 4 gebildet. Die Stirnseiten 5, 6 des Inliners 2 und des Jackets 3 verlaufen in derselben Querebene QE. Am äußeren Umfang des Jackets 3 ist ein Flansch 7 befestigt, dessen Stirnseite 8 sich ebenfalls in der Querebene QE erstreckt.

In dem Spalt 4 zwischen dem Inliner 2 und dem Jacket 3 ist ein ringförmiges Ausgleichselement 9 in Form eines rechteckig konfigurierten Drahtgestricks angeordnet.

Das Ausgleichselement 9 stützt sich mit einer Seite 13 an der äußeren Oberfläche 20 des Inliners 2 ab. Es ist mit seinen Seiten 10, 12 und 14 in eine Halterung 21 eingebettet, die durch Falzung eines Rohrstücks 22 gebildet ist. Dieses Rohrstück 22 besitzt einen endseitigen Flansch 23, der radial nach innen abgekantet ist. Seine Breite B2 ist kürzer als die Breite A des Spalts 4 bemessen.

Im Abstand von dem endseitigen Flansch 23 besitzt das Rohrstück 22 eine nach innen gerichtete Faltung 24, deren radiale Breite B3 ebenfalls kleiner als die Breite A des Spalts 4 bemessen ist. Auf diese Weise ist das Ausgleichselement 9 sicher gehalten. Es liegt nur an der inneren Oberfläche 11 des Jackets 3 an. Es kann sich relativ zum Jacket 3 begrenzt verschieben, verdrehen oder verkanten.

Neben der Faltung 24 erstreckt sich ein zylindrischer Längenabschnitt 25 des Rohrstücks 22 benachbart zur inneren Oberfläche 11 des Jackets 3. Dessen Länge L ist von der Schwingungscharakteristik der Abgasleitung 1 abhängig. Sein freies Ende ist im Bereich der Stirnseite 6 am Jacket 3 durch Punktschweißung festgelegt.

### Bezugszeichenaufstellung

- 1 -: Abgasleitung
- 2 -: Inliner
- 3 -: Jacket
- 4 -: Spalt zw. 2 u. 3
- 5 -: Stirnseite v. 2
- 6 -: Stirnseite v. 3
- 7 -: Flansch
- 8 -: Stirnseite v. 7
- 9 -: Ausgleichselement
- 10 -: Seite v. 9
- 11 -: innere Oberfläche v. 3
- 12 -: Seite v. 9
- 13 -: Seite v. 9
- 14 -: Seite v. 9
- 15 -: Halterung f. 9
- 16 -: Rohrstück
- 17 -: Flansch v. 16
- 18 -: Faltung v. 16
- 19 -: zylindrischer Längenabschnitt v. 16
- 20 -: äußere Oberfläche v. 2
- 21 -: Halterung
- 22 -: Rohrstück
- 23 -: Flansch v. 22
- 24 -: Faltung v. 22
- 25 -: zylindrischer Längenabschnitt v. 22

- A -: Abstand zw. 2 u. 3
- B -: Breite v. 17
- B1 -: Breite v. 18
- B2 -: Breite v. 23
- B3 -: Breite v, 24
- L -: Länge, v. 19 u. 25
- QE -: Querebene

## Patentansprüche

1. Abgasleitung (1) mit Luftspaltisolierung für eine Brennkraftmaschine, welche einen Abgas führenden inliner (2) und ein den Inliner (2) mit Abstand (A) ummantelndes Jacket (3) aufweist, wobei eine Stirnseite (6) des Jackets (3) sowie eine Stirnseite (5) des Inliners (2) in derselben Querebene (QE) verlaufen und in den Spalt (4) zwischen dem Inliner (2) und dem Jacket (3) ein Ausgleichselement (9) in Form eines einen rechteckigen Querschnitt aufweisenden Drahtgestricks eingegliedert ist, das innenseitig des Jackets (3) auf drei Seiten (10, 12, 14) in einer durch eine rinnenartige Falzung eines Rohrstücks (22) gebildeten Halterung (21) eingespannt und an der äußeren Oberfläche (20) des Inliners (2) relativ beweglich abgestützt ist, und wobei das der Halterung (21) abgewandte freie Ende eines zylindrischen Längenabschnitts (25) des Rohrstücks (22) im Bereich der Querebene (QE) axial fixiert ist, **dadurch gekennzeichnet, dass** eine Stirnseite (8) eines am äußeren Umfang des Jackets (3) im Abströmbereich der Abgasleitung (1) befestigten Flansches (7) sich ebenfalls in der Querebene (QE) erstreckt, das freie Ende des zylindrischen Längenabschnitts (25) des Rohrstücks (22) an der inneren Oberfläche (11 ) des Jackets (3) fixiert ist und zur Beeinflussung der Schwingungscharakteristik der Abgasleitung (1) die Länge (L) des zylindrischen Längenabschnitts (25) in die Abhängigkeit der örtlichen Gegebenheiten gestellt ist.

## Claims

1. An exhaust gas pipe (1) with air gap insulation for an internal combustion engine, comprising an inliner (2) carrying an exhaust gas and a jacket (3) surrounding the inliner (2) with spacing (A), an end face (6) of the jacket (3) and an end face (5) of the inliner (2) extending in the same transverse plane (QE) and a compensating element (9) in the form of a wire fabric having a rectangular cross-section is integrated into the gap (4) between the inliner (2) and the jacket (3) and is clamped internally of the jacket (3) on three sides (10, 12, 14) in a mounting (21) formed by a tubular member (22) being folded in the form of a channel and is supported so as to be relatively movable on the outer surface (20) of the inliner (2), the free end of a cylindrical section of the length (25) of the tubular member (22) remote from the mounting (21) being axially fixed in the region of the transverse plane (QE), **characterised in that** an end face (8) of a flange (7) fixed on the outer periphery of the jacket (3) in the outflow zone of the exhaust gas pipe (1) also extends in the transverse plane (QE), the free end of the cylindrical section of the length (25) of the tubular member (22) is fixed on the inner surface (11) of the jacket (3) and the length (L) of the cylindrical length section (25) is varied according to local conditions in order to influence the vibration characteristic of the exhaust gas pipe (1).

## Revendications

1. Conduite d'échappement des gaz (1) comportant une couche d'air isolante pour un moteur à combustion interne qui présente un inliner (2) guidant des gaz d'échappement et une chemise (3) enveloppant l'inliner (2) à une certaine distance (A), dans laquelle un côté frontal (6) de la chemise (3) ainsi qu'un côté frontal (5) de l'inliner (2) s'étendent dans le même plan transversal (QE) et dans l'espace (4) entre l'inliner (2) et la chemise (3) est intégré un élément de compensation (9) sous la forme d'un tricotage de fils présentant une section transversale rectangulaire qui, à l'intérieur de la chemise (3) est tendu sur trois côtés (10,12,14) dans un support (21) formé par un pliage en forme de gouttière d'un tronçon tubulaire (22) et sur la surface extérieure (20) de l' inliner (2) est supporté de façon relativement mobile, et dans laquelle l'extrémité libre détournée du support (24) d'une section longitudinale cylindrique (25) du tronçon tubulaire (22) est fixée axialement au niveau du plan transversal (QE), **caractérisée en ce qu'**un côté frontal (8) d'une bride (7) fixée sur la périphérie extérieure de la chemise (3) dans la zone d'écoulement de la conduite d'échappement des gaz (1) s'étend également dans le plan transversal (QE), l'extrémité libre de la section longitudinale cylindrique (25) de l'élément tubulaire (22) est fixée sur la surface intérieure (11) de la chemise (3) et, pour influer sur les propriétés de vibrations de la conduite d'échappement des gaz (1), la longueur (L) de la section longitudinale cylindrique (25) est ajustée en fonction des spécificités locales.
